(19) Europäisches Patentamt
European Patent Office
Office européen des brevets

(11) Veröffentlichungsnummer: **0 487 487 A2**

(12) **EUROPÄISCHE PATENTANMELDUNG**

(21) Anmeldenummer: **91890234.7**

(22) Anmeldetag: **07.10.91**

(51) Int. Cl.5: **C08G 73/10**, C08G 77/42

(30) Priorität: **16.10.90 AT 2087/90**

(43) Veröffentlichungstag der Anmeldung:
**27.05.92 Patentblatt 92/22**

(84) Benannte Vertragsstaaten:
**AT BE CH DE DK ES FR GB GR IT LI LU NL SE**

(71) Anmelder: **Lenzing Aktiengesellschaft**
**A-4860 Lenzing(AT)**

(72) Erfinder: **Seidl, Sigrid, Dr.**
**Gerlham 48**
**A-4863 Seewalchen(AT)**
Erfinder: **Weinrotter, Klaus, Dr.**
**Stadtplatz 36**
**A-4840 Vöcklabruck(AT)**
Erfinder: **Simharl, Reinhold**
**Am Sonnenhang 14**
**A-4860 Lenzing(AT)**

(74) Vertreter: **Schwarz, Albin, Dr.**
**Albertgasse 10/8 Postfach 224**
**A-1081 Wien(AT)**

(54) **Verfahren zur Herstellung von Polysiloxanimiden.**

(57) Verfahren zur Herstellung von Polysiloxanimiden durch Umsetzung von Benzophenon-3,3',4,4'-tetracarbonsäure-dianhydrid mit einem Diamino-organopolysiloxan der allgemeinen Formel

$$NH_2\text{-}R\text{-}[\text{-}Si(R')_2 O\text{-}]_n\text{-}Si(R')_2\text{-}R\text{-}NH_2 \qquad ,(I)$$

in der R und R' für einen zweibindigen bzw. einbindigen aliphatischen oder aromatischen Rest stehen und n eine ganze Zahl größer 1 bedeutet und 2,4- und/oder 2,6-Toluylen-diisocyanat, wobei das Diamino-organopolysiloxan in einer Menge zwischen 1 und 10 Mol-% und das 2,4-und/oder 2,6-Toluylen-diisocyanat in einer Menge zwischen 99 und 90 Mol-%, jeweils bezogen auf das Benzophenon-3,3',4,4'-tetracarbonsäure-dianhydrid, eingesetzt werden.

EP 0 487 487 A2

Die Erfindung betrifft ein Verfahren zur Herstellung von aromatischen Polysiloxanimiden.

Polysiloxan-modifizierte, aromatische Polyimide unterscheiden sich strukturell von den herkömmlichen Polyimiden durch Siloxan-Gruppen (-Si(R)$_2$-O-), die in die Polyimidkette eingebaut sind. Der Einbau derartiger Gruppen verbessert die Löslichkeit und die Verarbeitbarkeit der aromatischen Polyimide. Weiters wird die Aufnahme von Wasser verringert und die Haftfähigkeit des Polymeren auf den verschiedensten Substraten verbessert. Diese Verbesserung der Polyimideigenschaften gelingt schon bei relativ kleinen Siloxan-Anteilen in der Polyimidkette, sodaß die hohe Temperaturbeständigkeit des Polyimides praktisch voll erhalten bleibt. Aromatische Polysiloxanimide werden insbesondere als Klebstoffe und als Beschichtungs- und Imprägniermaterialien in der Mikrolelektronik und in der Luftfahrt verwendet.

Verfahren zur Herstellung von Polysiloxanimiden sind beispielsweise aus der EP-A - 0 328 027, der EP-A - 0 328 028 und der EP-A - 0 295 561 bekannt. Bei allen diesen Verfahren wird ein aromatisches Carbonsäuredianhydrid, insbesondere Benzophenon-3,3',4,4'-tetracarbonsäure-dianhydrid, mit einem Diamino-organopoly-siloxan und einem aromatischen Diamin umgesetzt. Dieser Syntheseweg führt über eine Polyamidsäure, die unter Wasserabspaltung imidisiert werden muß. Es handelt sich somit um einen Zweistufenprozeß, wobei die Entwässerung der Polyamidsäure entweder thermisch oder chemisch vorgenommen werden muß.

Die Wasserabspaltung ist nicht leicht durchzuführen und gelingt auch nicht quantitativ. Die unvollständige Entwässerung wirkt sich nachteilig auf die Eigenschaften des Endproduktes aus. Das ist auch dann der Fall, wenn die Polyamidsäure, also die Vorstufe, zur Weiterverarbeitung zu Folien, Beschichtungen etc. eingesetzt wird und die Entwässerung an diesen Produkten selbst vorgenommen wird. Es hat sich nämlich gezeigt, daß das frei werdende Wasser im Produkt sogenannte "Mikro-Löcher" bildet, wodurch sich seine mechanischen Eigenschaften verschlechtern.

Die Erfindung stellt sich die Aufgabe, die Herstellung aromatischer Polysiloxanimide diesbezüglich zu verbessern und sie besteht darin, daß Benzophenon-3,3',4,4'-tetracarbonsäure-dianhydrid mit einem Diamino-organopolysiloxan der allgemeinen Formel

NH$_2$-R-[-Si(R')$_2$O-]$_n$-Si(R')$_2$-R-NH$_2$        ,(I)

in der R und R' für einen zweibindigen bzw. einbindigen aliphatischen oder aromatischen Rest stehen und n eine ganze Zahl größer 1 bedeutet, und 2,4- und/oder 2,6-Toluylen-diisocyanat umgesetzt wird, wobei das Diamino-organopolysiloxan in einer Menge zwischen 1 und 10 Mol-% und das 2,4- und/oder 2,6-Toluylen-diisocyanat in einer Menge zwischen 99 und 90 Mol-%, jeweils bezogen auf das Benzophenon-3,3',4,4'-tetracarbonsäure-dianhydrid, eingesetzt werden. Der Rest R steht vorzugsweise für Alkylen mit 1 bis 5 Kohlenstoffatomen oder für Phenylen; der Rest R' steht vorzugsweise für Alkyl mit 1 bis 5 Kohlenstoffatomen oder für Phenyl. Bevorzugt eingesetzt wird das Diaminopolydimethylsiloxan der Formel

NH$_2$-(CH$_2$)$_3$-[-Si(CH$_3$)$_2$O]$_n$-Si(CH$_3$)$_2$-(CH$_2$)$_3$-NH$_2$        ,(II)

worin n eine ganze Zahl zwischen 5 und 25 bedeutet.

Es ist wesentlich, daß die Umsetzung mit nicht mehr als 10 Mol-% Diaminosiloxan, bezogen auf das Dianhydrid, durchgeführt wird, da andernfalls das Kondensationsprodukt nicht vollständig in imidisierter Form vorliegt. Es hat sich weiters gezeigt, daß das Endprodukt dann besonders wenig Wasser aufnimmt und eine hohe Haftfähigkeit besitzt, wenn das Diaminosiloxan in der Reaktionsmischung in einer Menge zwischen 3 und 5 Mol-%, bezogen auf das Anhydrid, vorliegt.

Eine vorteilhafte Ausführungsform des erfindungsgemäßen Verfahrens besteht darin, daß das 2,4- und/oder 2,6-Toluylen-diisocyanat teilweise durch 4,4'-Methylen- bis-(phenylisocyanat) ersetzt ist, wobei das 2,4- und/oder 2,6-Toluylen-diisocyanat und das 4,4'-Methylen- bis-(phenylisocyanat) am besten im Molverhältnis 70-99 : 30-1 vorliegen.

Die Umsetzung kann in einem aprotischen Lösungsmittel, in einem Temperaturbereich zwischen 20°C und 160°C, vorzugsweise zwischen 70°C und 90°C, ausgeführt werden. Als Lösungsmittel kommen in erster Linie Dimethylformamid, Dimethylacetamid, Dimethylsulfoxid oder N-Methylpyrrolidon in Frage. Es entsteht eine Lösung des Polysiloxanimides, die als solche weiter verarbeitet werden kann, oder aus der das Polysiloxanimid gefällt wird (z.B. mit Isopropylalkohol). Die Lösungsmittelmenge wird so gewählt, daß nach der Reaktion das Polysiloxanimid in einer Konzentration zwischen 15 und 40 Gew.-% vorliegt.

Die Umsetzung kann in Gegenwart von in der Polyimidchemie an sich bekannten Reaktionsbeschleunigern vorgenommen werden. Als solche eignen sich insbesondere jene, die in der US-A - 4,156,065, der US-A - 4,094,866 und in der US-A - 4,001,186 genannt sind.

Das erfindungsgemäße Verfahren kann auf drei Arten durchgeführt werden, je nachdem ob das Diisocyanat zugleich mit dem Diamino-organopolysiloxan oder vorher bzw. nachher in die Reaktionsmischung eingebracht wird.

Wird das erfindungsgemäße Verfahren so durchgeführt, daß das 2,4- und/oder 2,6-Toluylen-diisocyanat, gegebenenfalls in einer Mischung mit dem 4,4'-Methylen- bis-(phenylisocyanat), in ein Gemisch aus Benzophenon-3,3',4,4'-tetracarbonsäure-dianhydrid und Diamino-organopolysiloxan eingebracht wird, so wird ein Polysiloxanimid mit enger Molekulargewichtsverteilung erhalten. Wird umgekehrt das Diamino-organopolysiloxan in ein Gemisch aus Benzophenon-3,3',4,4'-tetracarbonsäure-dianhydrid, 2,4- und/oder 2,6-Toluylen-diisocyanat und gegebenenfalls 4,4'-Methylen-bis-(phenylisocyanat) eingebracht, so wird ein Polysiloxanimid mit höherem Molekulargewicht und breiter Verteilung erhalten. Werden schließlich das Diisocyanat und das Diamino-organopolysiloxan zugleich in die Lösung des Dianhydrides eingebracht, so erhält man ein Polysiloxanimid mit ähnlichem Molekulargewicht und Verteilung wie bei Zugabe des Diaminosiloxans vor dem Diisocyanat.

Das Fortschreiten der Reaktion kann IR-spektroskopisch (Verschwinden der NCO- oder der Amidsäure-Absorption) verfolgt werden. Das Aufhören der $CO_2$-Entwicklung in der Reaktionsmischung zeigt ebenfalls das Ende der Reaktion an.

Nach Beendigung der Reaktion erhält man viskose hellgelbe bis braunrote Polysiloxanimidlösungen mit einer inhärenten Viskosität (c = 0,5 g/dl bei 25°C in DMF/1 % LiBr) von 30 bis 80 ml/g. Das mittels Gelpermeationschromatographie bestimmte Molekulargewicht des Polieren beträgt zwischen 30000 und 150000 (Molekulargewichtsverteilung D von 1,8 bis 4).

Die erfindungsgemäß hergestellten siloxanmodifizierten Polyimide können zur Herstellung von Pulver, Folien, Fasern, Formteilen und zur Beschichtung verwendet werden.

Die folgenden Beispiele sollen die Erfindung näher erläutern.

Beispiel 1

In einem 1000 ml Kolben mit Rührer, Rückflußkühler, Thermometer und Stickstoffspülung werden 161 g (0,5 mol) Benzophenon-3,3', 4,4'-tetracarbonsäuredianhydrid in 704 g trockenem DMF gelöst. Die Reaktionsmischung wird auf 80°C erwärmt und unter konstantem Rühren werden innerhalb von 15 Minuten 26,6 g (0,025 mol) $\alpha,\omega$-Diaminopolydimethylsiloxan n = 12 (Tego OF 2010 der Firma Goldschmidt AG) zugegeben. Danach werden innerhalb von vier Stunden unter konstantem Rühren bei 80°C 90 g (0,475 mol) eines Diisocyanatgemisches, bestehend aus 80 Mol-% Toluylendiisocyanat und 20 Mol-% Methylen-bis-(phenylisocyanat), zugetropft. Die fertige Polykondensationslösung wird bis zur Beendigung der $CO_2$-Entwicklung eine Stunde bei 80°C weitergerührt, mittels IR-Spektralanalyse sind danach keine freien NCO-Gruppen und keine Amidsäurebindungen nachweisbar.

Die fertige Polysiloxanimidlösung hat eine inhärente Viskosität (c = 0,5 g/dl bei 25°C in DMF/1% LiBr) von 40 ml/g und ein Molekulargewicht von 70000 mit einer Molekulargewichtsverteilung von D = 2,5.

Durch Zugabe von Isopropanol wird das Polysiloxanimid ausgefällt, der hellgelbe Niederschlag abfiltriert, gewaschen und getrocknet. Die Glasübergangstemperatur des Pulvers liegt bei 302°C (bestimmt mit Perkin Elmer Differential Scanning Calorimeter DSC-4 in Stickstoff, Aufheizrate 20°C/min). Das FTIR-Spektrum dieses Polysiloxanimides weist eindeutig außer den charakteristischen Imidbanden bei 1780 cm$^{-1}$ und 720 cm$^{-1}$ eine breite Si-O-Si Bande zwischen 1000 und 1100 cm$^{-1}$ auf.

Aus der fertigen Polysiloxanimidlösung können mittels Laborfolienziehgerät Folien auf Glasplatten gezogen werden. Die Folien werden folgendem Trocknungsprogramm unterzogen: 16 Stunden bei 50°C im Umlufttrockenschrank, 24 Stunden bei 100°C und eine Stunde bei 280°C im Vakuumtrockenschrank. Der Restlösungsmittelgehalt der auf diese Weise hergestellten Folien ist < 1 %. Der LOI Wert (Limited Oxygen Index bestimmt nach ASTM D 2863) dieser Folie beträgt 41 % $O_2$. Die Wasseraufnahme dieser Folie beträgt nach 24 Stunden Lagerung in Wasser bei Raumtemperatur 1,63 %.

Der Gewichtsverlust dieses Polysiloxanimides beträgt nach 240 Minuten bei 450°C in Luft 41 Gewichtsprozent (bestimmt mittels Perkin Elmer TGS-2).

Beispiele 2 - 4

Nach der in Beispiel 1 beschriebenen Arbeitsvorschrift werden durch Variation der Diisocyanatkomponente bzw. durch Variation der Menge des $\alpha,\omega$-Polydimethylsiloxans weitere Polysiloxanimide hergestellt. Die Zusammensetzung des Reaktionsgemisches und die charakteristischen Daten der entsprechenden Polysiloxanimide sind der Tabelle 1 zu entnehmen, wobei bei allen Beispielen 161 g (0,5 mol) Benzophenontetracarbonsäuredianhydrid eingesetzt worden sind.

TABELLE 1

| Bsp.Nr. | Diisocyanat g (mol) | Tego OF 2010 g (mol) | DMF g | Tg-Punkt |
|---|---|---|---|---|
| 2 | 84,4 (0,485) TDI | 15,9 (0,015) | 655 | 315 °C |
| 3 | 82,7 (0,475) TDI | 26,6 (0,025) | 683 | 309 °C |
| 4 | 62,7 (0,36) TDI 22,5 (0,09) MDI | 53,2 (0,05) | 774 | 290 °C |

TDI Toluylendiisocyanat (2,4- und/oder 2,6-Isomeres) MDI 4,4'-Methylenbis(phenylisocyanat) Tego OF 2010 Polydimethylsiloxan, n = 12 Tg-Punkt bestimmt mittels Perkin Elmer DSC-4 in Stickstoff, Aufheizrate 20 °C/min

Der Tabelle 2 sind die charakteristischen thermogravimetrischen Daten der in den Beispielen 1 bis 4 hergestellten Polyimidsiloxane zu entnehmen. Die Messungen wurden mit einem Perkin Elmer Thermogravimetrie-Gerät TGS-2 in Luft mit einer Aufheizrate von 20 °C/min durchgeführt.

TABELLE 2

| Bsp.Nr. | 5% Gew.Verlust bei | Gewichtsverlust bei 450 °C | Restgewicht bei 690 °C |
|---|---|---|---|
| 1 | 436 °C | 6,7 % | 6,2 % |
| 2 | 450 °C | 5 % | 3,2 % |
| 3 | 442 °C | 6,2 % | 6,3 % |
| 4 | 412 °C | 9 % | 10,7 % |

Beispiel 5

In einem 1000 ml Kolben mit Rührer, Rückflußkühler, Thermometer und Stickstoffspülung werden 161 g (0,5 mol) Benzophenon-3,3',4,4'-tetracarbonsäuredinahydrid in 704 g trockenem DMF gelöst. Das Reaktionsgemisch wird auf 80 °C erwärmt und unter konstantem Rühren werden innerhalb von vier Stunden 90 g (0,475 mol) eines Diisocyanatgemisches, bestehend aus 80 Mol% Toluylendiisocyanat und 20 Mol% Methylenbis(phenylisocyanat) zugetropft. Danach werden sofort innerhalb von 15 Minuten 26,6 g (0,025 mol) $\alpha,\omega$-Diaminopolydimethyl-siloxan n=12 (Tego OF der Firma Goldschmidt AG) unter konstantem Rühren zugetropft. Die fertige Polykondensationslösung wird bis zur Beendigung der $CO_2$-Entwicklung eine Stunde bei 80 °C weitergerührt, mittels IR-Spektralanalyse sind danach keine freien NCO-Gruppen mehr nachweisbar; geringe Anteile an Amidsäurebindungen sind dem IR-Spektrum zu entnehmen. Die fertige Polysiloxanimidlösung hat eine inhärente Viskosität von 51 ml/g (c = 0,5 g/dl bei 25 °C in DMF/1%LiBr) und ein Molekulargewicht von 99000 mit einer Molekulargewichtsverteilung von D = 3,5.

Beispiel 6

In einem 1000 ml Kolben mit Rührer, Rückflußkühler, Thermometer und Stickstoffspülung werden 161 g (0,5 mol) Benzophenon-3,3',4,4'-tetracarbonsäuredianhydrid in 704 g trockenem DMF gelöst. Das Reaktionsgemisch wird auf 80 °C erwärmt und unter konstantem Rühren werden innerhalb von vier Stunden 90 g (0,475 mol) eines Diisocyanatgemisches, bestehend aus 80 Mol% Toluylendiisocyanat und 20 Mol% Methylenbis(phenylisocyanat) und gleichzeitig 26,6 g (0,025 mol) $\alpha,\omega$-Diaminopolydimethylsiloxan n=12 (Tego OF der Firma Goldschmidt AG) zugetropft. Die fertige Polykondensationslösung wird bis zur Beendigung der $CO_2$-Entwicklung eine Stunde bei 80 °C weitergerührt, mittels IR-Spektralanalyse sind danach keine freien NCO-Gruppen mehr nachweisbar, geringe Anteile an Amidsäurebindungen sind dem IR-Spektrum zu entnehmen.

Die fertige Polysiloxanimidlösung hat eine inhärente Viskosität von 41 ml/g (c = 0,5 g/dl bei 25 °C in DMF/1%LiBr) und ein Molekulargewicht von 73000 mit einer Molekulargewichtsverteilung von D = 2,45.

**Patentansprüche**

4

1. Verfahren zur Herstellung von Polysiloxanimiden durch Umsetzung von Benzophenon-3,3',4,4'-tetracarbonsäuredianhydrid mit einem Diamino-organopolysiloxan der allgemeinen Formel

$NH_2$-R-[-Si(R')$_2$O-]$_n$-Si(R')$_2$-R-$NH_2$      ,(I)

in der R und R' für einen zweibindigen bzw. einbindigen aliphatischen oder aromatischen Rest stehen und n eine ganze Zahl größer 1 bedeutet, und 2,4- und/oder 2,6-Toluylen-diisocyanat, wobei das Diamino-organopolysiloxan in einer Menge zwischen 1 und 10 Mol-% und das 2,4-und/oder 2,6-Toluylen-diisocyanat in einer Menge zwischen 99 und 90 Mol-%, jeweils bezogen auf das Benzophenon-3,3',4,4'-tetracarbonsäuredianhydrid, eingesetzt werden.

2. Verfahren zur Herstellung von Polysiloxanimiden nach Anspruch 1, dadurch gekennzeichnet, daß das 2,4- und/oder 2,6-Toluylen-diisocyanat teilweise durch 4,4'-Methylen-bis-(phenylisocyanat) ersetzt ist.

3. Verfahren nach Anspruch 2, dadurch gekennzeichnet, daß das 2,4- und/oder 2,6-Toluylen-diisocyanat und das 4,4'-Methylen-bis-(phenylisocyanat) im Molverhältnis 70-99 : 30-1 vorliegen.

4. Verfahren nach einem oder mehreren der Ansprüche 1 bis 3, dadurch gekennzeichnet, daß die Umsetzung in einem aprotischen Lösungsmittel, in einem Temperaturbereich zwischen 20°C und 160°C, vorzugsweise zwischen 70°C und 90°C, ausgeführt und das Polysiloxanimid gefällt wird.

5. Verfahren nach Anspruch 4, dadurch gekennzeichnet, daß das 2,4- und/oder 2,6-Toluylen-diisocyanat, gegebenenfalls in einer Mischung mit dem 4,4'-Methylen- bis-(phenylisocyanat), in ein Gemisch aus Benzophenon-3,3',4,4'-tetracarbonsäure-dianhydrid und Diamino-organopolysiloxan eingebracht wird.

6. Verfahren nach Anspruch 4, dadurch gekennzeichnet, daß das Diamino-organopolysiloxan in ein Gemisch aus Benzophenon-3,3',4,4'-tetracarbonsäure-dianhydrid, 2,4- und/oder 2,6-Toluylen-diisocyanat und gegebenenfalls 4,4'-Methylen-bis-(phenylisocyanat) eingebracht wird.

7. Verfahren nach Anspruch 4, dadurch gekennzeichnet, daß das Diamino-organopolysiloxan und das 2,4- und/oder 2,6-Toluylen-diisocyanat, letzteres gegebenenfalls in Mischung mit dem 4,4'-Methylen-bis-(phenylisocyanat), gleichzeitig in das Benzophenon-3,3',4,4'-tetracarbonsäure-dianhydrid eingebracht wird.